Europäisches Patentamt

(19) European Patent Office

Office européen des brevets

(11) Numéro de publication: **0 252 791 B1**

# (12) FASCICULE DE BREVET EUROPEEN

(45) Date de publication du fascicule du brevet:
25.07.90

(21) Numéro de dépôt: 87401381.6

(22) Date de dépôt: **19.06.87**

(51) Int. Cl.⁵: **B65D 77/20**

(54) Plateau-présentoir perfectionné formant emballage.

(30) Priorité: **09.07.86 FR 8610026**

(43) Date de publication de la demande:
**13.01.88 Bulletin 88/2**

(45) Mention de la délivrance du brevet:
**25.07.90 Bulletin 90/30**

(84) Etats contractants désignés:
**AT BE CH DE ES GB IT LI LU NL**

(56) Documents cités:
**BE-A- 680 406**
**FR-A- 1 440 851**
**GB-A- 898 641**
**GB-A- 1 349 103**
**US-A- 4 337 116**
**US-A- 4 387 551**
**US-A- 4 469 258**

**Prospectus "4P Aktuell, R 1/79"**

(73) Titulaire: **BRESSOR, Servas (Ain),**
**F-01240 Saint-Paul-de-Varax(FR)**

(72) Inventeur: **Chanel, Arthur Louis,**
**F-01310 Saint-Remy(FR)**

(74) Mandataire: **Barnay, André François, Cabinet**
**Barnay 80 rue Saint-Lazare, F-75009 Paris(FR)**

ACTORUM AG

## Description

La présente invention est relative à un plateau-présentoir formant emballage.

On connait déjà de nombreux emballages en matière plastique comportant un réceptacle rigide, comportant ou non des alvéoles logeant le ou les produits, et fermé par une feuille pelable c'est-à-dire pouvant être décollée progressivement par une traction exercée sur une partie de sa périphérie.

Dans les emballages de ce type, le réceptacle est en chlorure de polyvinyle (PVC) et la feuille qui le ferme est en polyéthylène, dont la soudure sur le PVC permet l'arrachement, mais qui est souple.

Cette matière ne présentant pas de rigidité ces emballages protègent mal les produits qu'ils contiennent, et il n'était jusqu'à présent pas possible de réaliser un emballage ayant un fond et un couvercle rigides en PVC qui protège ainsi efficacement les produits ou articles emballés contre les contacts, chocs ou pressions et dont le couvercle puisse être détaché du fond par décollement progressif, c'est-à-dire un couvercle dit "pelable" en raison du fait que les soudures PVC sur PVC ne sont pas séparables.

GB-A 1 349 103 décrit un emballage comportant un fond et un couvercle en PVC soudés, dont la soudure périphérique présente une ligne d'affaiblissement permettant de les séparer par déchirure du PVC.

L'effort nécessaire pour déchirer la matière est supérieur à la résistance de l'emballage à la déformation.

Le but de l'invention est de remédier à ces inconvénients en réalisant un emballage entièrement rigide ayant en outre un couvercle rigide pelable.

Elle a pour objet à cet effet un emballée formant plateau-présentoir, tel que défini suivant la revendication.

La description qui va suivre, en regard des dessins annexés à titre d'exemple non limitatif, permettra de bien comprendre comment l'invention peut être mise en pratique.

La figure 1 est une vue en élévation latérale schématique en section longitudinale d'un plateau-présentoir suivant l'invention.

La figure 2 en est une vue de dessus en plan.

La figure 3 est une vue schématique partielle en coupe suivant la ligne III–III de la figure 2.

La figure 4 est une vue schématique partielle en coupe suivant la ligne IV–IV de la figure 2.

La figure 5 est une vue partielle à très grande échelle montrant la superposition des différentes couches de matières du fond et/ou du couvercle.

En se référant au dessin, le plateau-présentoir suivant l'invention comprend un fond 1 et un couvercle 2 présentant chacun un rebord périphérique plat 3, 3' s'étendant vers l'extérieur dans un plan parallèle au plan longitudinal médian X-X de l'ensemble.

Suivant le mode de réalisation représenté, le fond 1 est en une matière composite comprenant une feuille 10 de chlorure de polyvinyle (PVC) de qualité alimentaire, opaque, colorée ou non, formée à chaud suivant un procédé connu de manière à présenter des alvéoles 4 destinés à recevoir par exemple des petits fromages (bouchées), et revêtue ensuite par enduction d'une couche plus mince 11 de polyéthylène de qualité alimentaire sur laquelle est enfin appliqué par complexage sous pression un mince film 12 de polyéthylène de qualité dite "pelable".

Le fond comporte avantageusement une gouttière périphérique 5 de section en U ou analogue avantageusement formée par le même procédé que les alvéoles 4 et en même temps que ceux-ci.

Comme représenté au dessin, la gouttière 5 est immédiatement adjacente au rebord périphérique 3' du fond, vers l'intérieur par rapport audit rebord.

Le couvercle 2 est creux et forme cloche, il est réalisé également en la même matière composite que le fond 1, mais transparent; son ouverture est délimitée par le rebord 3 dont la forme et les dimensions sont identiques à celles du rebord 3' du fond 1.

Les rebords 3 et 3' comportent chacun deux oreilles 6, 6' opposées s'étendant vers l'extérieur dans le plan des rebords 3, 3' respectivement.

Suivant l'exemple représenté, les oreilles 6, 6' ont une forme arrondie, mais leur forme peut être allongée, rectangulaire ou autre.

De même, en ce qui concerne les alvéoles 4, on comprend que leur forme et leur nombre peuvent être différents de l'exemple représenté.

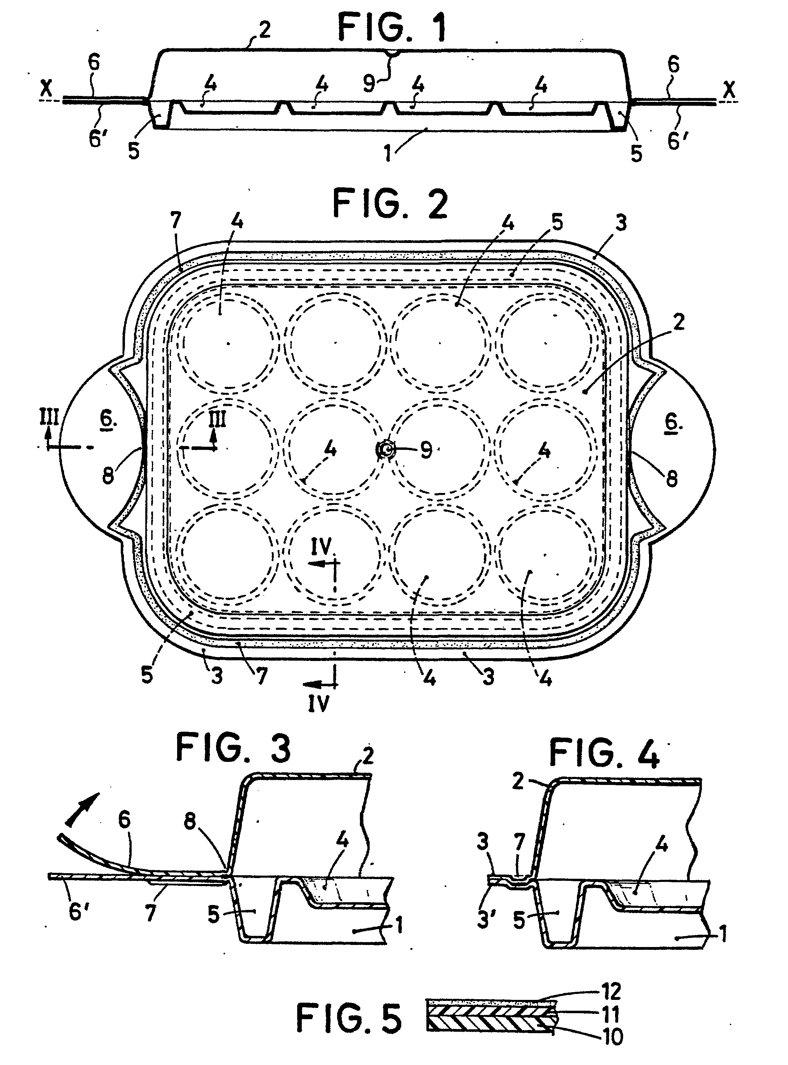

Les rebords 3, 3' sont collés ou soudés, de préférence par haute fréquence ou autre procédé approprié non thermique, suivant une bande continue 7 sur les rebords, de largeur constante sur toute la périphérie de l'emballage excepté au niveau des oreilles 6, 6' où cette soudure des films de polyéthylène pelables l'un sur l'autre présente une partie affaiblie constituée par une portion 8 de largeur notablement réduite, laissant subsister une portion notable des oreilles 6, 6' non soudées ensemble et permettant de les écarter et de les saisir, comme représenté à la figure 3 afin d'exercer sur elles une traction en sens inverse au niveau de la région affaiblie 8 de la soudure 7. On peut ainsi ouvrir facilement le plateau-présentoir par décollement progressif du couvercle.

D'une façon avantageuse le couvercle 2 comporte au moins une saillie dirigée vers l'intérieur telle que représentée en 9, en forme de pyramide ou de cône, afin de rassembler une condensation éventuelle sur la face interne du couvercle.

Etant dépourvu de moyens analogues à la gouttière 5 du fond, le couvercle est moins rigide que celui-ci, ce qui facilite le décollement à l'ouverture du plateau-présentoir. En outre son épaisseur est inférieure à celle du plateau le rapport des épaisseurs couvercle/plateau étant avantageusement d'environ 7:10.

La rigidité du plateau-présentoir suivant l'invention permet l'emballage de produits fragiles tels que des fromages et leur superposition sans risques de détérioration.

Le plateau-présentoir ainsi réalisé est rigide et étanche. De ce fait il est de préférence rempli d'un gaz inerte au moment du soudage, assurant ainsi une durée de conservation étendue des produits qu'il contient.

On comprend, bien entendu, que l'invention n'est pas limitée à la forme représentée en plan à titre d'exemple à la figure 2, cette forme pouvant être circulaire, ovale ou autre. De plus, des motifs décoratifs ou publicitaires peuvent être ajoutés sur le plateau.

**Revendications**

1. Emballage formant plateau-présentoir, comportant un fond alvéolé et un couvercle rigides en PVC, le couvercle étant fixé sur le fond par une bande de soudure périphérique présentant au moins une région d'affaiblissement, le fond et le couvercle comportant chacun un rebord périphérique externe plat s'étendant dans un plan parallèle à celui dudit plateau, caractérisé en ce que la rigidité dudit fond (1) est supérieure à celle du couvercle (2), le fond (1) et le couvercle (2) étant revêtus par enduction, après mise en forme, d'une couche de polyéthylène (11) sur laquelle est appliqué par complexage sous pression un film (12) de polyéthylène du type soudable, mais pouvant être décollé progressivement, le fond et le couvercle présentant chacun deux oreilles opposées (6, 6') en saillie et de forme et dimensions identiques, le fond comportant en outre une gouttière (5) de section en U ou analogue adjacente audit rebord (3') et vers l'intérieur par rapport à celui-ci.

**Patentansprüche**

1. Verpackung, die ein Präsentiertablett bildet, mit einem starren, zellenförmigen Boden und Deckel aus PVC, wobei der Deckel am Boden durch einen Umfangsschweißstreifen befestigt ist, der wenigstens einen Schwächungsbereich hat, und der Boden und der Deckel jeweils einen äußeren, ebenen Rand besitzen, der sich in einer zur Ebene des Tabletts parallelen Ebene erstreckt, dadurch gekennzeichnet, daß die Steifigkeit des Bodens (1) höher ist als jene des Deckels (2), wobei der Boden (1) und der Deckel (2) nach ihrer Formung durch Überziehen mit einer Schicht (11) aus Polyethylen beschichtet werden der durch Verbund unter Druck ein Film (12) aus schweißbarem Polyethylen aufgebracht wird, der jedoch fortlaufend gelöst werden kann, der Boden und der Deckel jeweils zwei gegenüberliegende, abstehende Ohren (6, 6') identischer Form und Dimension haben, und der Boden überdies eine Rinne (5) mit U-förmigem oder ähnlichem Querschnitt nahe und innerhalb des Randes (3') besitzt.

**Claims**

1. Packaging container in the shape of a presentation tray, comprising a rigid PVC cellular base and a rigid PVC lid, the lid being fastened to the base by a peripheral welding strip having at least one weakened region, the base and lid each comprising a flat outer peripheral rim extending in a plane parallel to that of the said tray, characterized in that the rigidity of the said base (1) is greater than that of the lid (2), the base (1) and the lid (2) being covered by coating, after shaping, with a layer of polyethylene (11) to which a polyethylene film (12) of the weldable type, but capable of being detached gradually, is applied by complex structure formation under pressure, the base and the lid each having two opposite projecting lugs (6, 6') of identical shape and dimensions, the base additionally comprising a collecting groove (5), of U-shaped or similar cross-section, adjacent to the said rim (3') and towards the inside relative to the latter.

# FIG. 1

# FIG. 2

# FIG. 3

# FIG. 4

# FIG. 5